# EUROPÄISCHE PATENTSCHRIFT

(11) **EP 1 040 038 B1**
(45) Veröffentlichungstag und Bekanntmachung des Hinweises auf die Patenterteilung: **10.04.2002**
(21) Anmeldenummer: 98959887.5
(22) Anmeldetag: 26.11.1998
(51) Int. Cl.: B62D 1/16

(54) **LENKANLAGE FÜR KRAFTFAHRZEUGE MIT EINER ZWISCHEN DEM LENKRAD UND DEM SPURHEBEL ANGEORDNETEN, MINDESTENS ZWEITEILIGEN LENKSÄULE**
AUTOMOTIVE STEERING SYSTEM WITH A STEERING COLUMN CONSISTING OF AT LEAST TWO PARTS ARRANGED BETWEEN THE STEERING WHEEL AND THE TRACKING LEVER
SYSTEME DE DIRECTION POUR VEHICULES AUTOMOBILES, COMPORTANT UNE COLONNE DE DIRECTION EN AU MOINS DEUX PARTIES SITUEE ENTRE LE VOLANT ET LE LEVIER DE BARRE

(30) Priorität: 17.12.1997 DE 19756057
(43) Veröffentlichungstag der Anmeldung: 04.10.2000
(73) Patentinhaber: Micro Compact Car smart GmbH, 71272 Renningen (DE)
(72) Erfinder: GANSER, Martin, D-71263 Weil der Stadt (DE)
(74) Vertreter: Dahmen, Toni, Dipl.-Ing.
(86) Internationale Anmeldenummer: EP9807632
(87) Internationale Veröffentlichungsnummer: WO9930955

(56) Entgegenhaltungen:
- EP-A- 0 188 164

## Beschreibung

Die Erfindung betrifft eine Lenkanlage für Kraftfahrzeuge mit einer zwischen dem Lenkrad und dem Spurhebel angeordneten, mindestens zweiteiligen Lenksäule, wobei der das Lenkrad tragende erste Lenksäulenabschnitt in einem Winkel zwischen 0 bis 30° zur Fahrzeuglängsachse und der den Spurhebel tragende Lenksäulenabschnitt in einem Winkel zwischen 0 bis 40° zur Fahrzeughochachse ausgerichtet ist und zwischen beiden Längssäulenabschnitten ein Winkelgetriebe angeordnet ist.

Aus der PS-DE 392 621 ist eine derartige Lenkanlage bekannt. Zumindest der obere Lenksäulenabschnitt hat keine durchgehende Bohrung, so daß eine einfache elektrische Konfektionierung beispielsweise eines Airbags und Signalhornschalters im Lenkrad nicht möglich ist.

Ferner ist aus der EP 0 188 164 eine Lenkanlage bekannt, bei der in einem rohrförmigen Lenkwellenelement ein Kabel geführt ist, das u.a. die Lenkradnabe mit Strom versorgt. Das Kabel liegt in dem Lenkwellenelement in einer Bohrung, deren Durchmesser nur unwesentlich größer ist als der Außendurchmesser des Kabels.

Der vorliegenden Erfindung liegt das Problem zugrunde, eine bekannte Lenkanlage in Hinblick auf eine einfache elektrische Konfektionierbarkeit und einen modularen Aufbau zu verbessern.

Hierbei sollen die gängigen sicherheitstechnischen und komfortbedingten Ansprüche berücksichtigt werden.

Das Problem wird u.a. mit den Merkmalen des Hauptanspruchs gelöst. Dabei hat mindestens der erste Lenksäulenabschnitt zwischen dem Lenkrad und dem Winkelgetriebe ein rohrförmiges, mindestens im Bereich seiner Enden offenes Lenkwellenelement, das zumindest über zwei Lager an der Fahrzeugkarosserie um seine Längsachse drehbar gelagert ist. Der minimale Innendurchmesser des ersten Lenkwellenelements ist im Bereich zwischen den Lagern und außerhalb des Anflanschbereichs des ersten Getrieberades mindestens um den Faktor 15 größer als die Differenz zwischen dem mittleren Außendurchmesser und dem minimalen Innendurchmesser des Lenkwellenelements.

Das einen Teil des ersten, oberen Lenksäulenabschnitts bildende Lenkwellenelement weist eine Bohrung oder einen Kanal auf, der groß genug ist, um einen mehrpoligen Stecker einschließlich des daranhängenden Kabels oder Kabelbaumes problemlos hindurchzuführen. Das Lenkwellenelement kann hierbei beispielsweise zumindest partiell ein dünnwandiges Rohr, ein Gitterrohr, ein Wellrohr, ein Drahtgeflecht oder ein Stabwerk sein. Es hat bei einem geringen Bauteilgewicht und einer guten Stauchbarkeit eine hohe Torsionssteifigkeit.

Unabhängig von der Konstruktion der einzelnen Lenksäulenabschnitte kann das Winkelgetriebe jeder Getriebetyp sein, der die Umdrehung einer Welle auf eine andere, nicht parallele Welle überträgt. Zwischen der antreibenden und angetriebenen Welle kann die Übersetzung variabel sein. Beispielsweise verringert sich die Zahnteilung mit zunehmendem Lenkeinschlag.

Auch kann zumindest ein Getrieberad nur als Segment eines Vollrades ausgebildet sein.

Weitere Einzelheiten der Erfindung ergeben sich aus den Unteransprüchen und der nachfolgenden Beschreibung mehrerer schematisch dargestellter Ausführungsformen:
- Figur 1:: Lenkanlage mit einem zwischen zwei Lenksäulenabschnitten angeordneten Winkelgetriebe;
- Figur 2:: Abstützung des oberen Lenksäulenabschnitts an der Fahrzeugkarosserie;
- Figur 3:: Oberer Lenksäulenabschnitt für eine verstellbare Lenksäule;
- Figur 4:: Oberer Lenksäulenabschnitt mit feststehender Lenkradnabe.

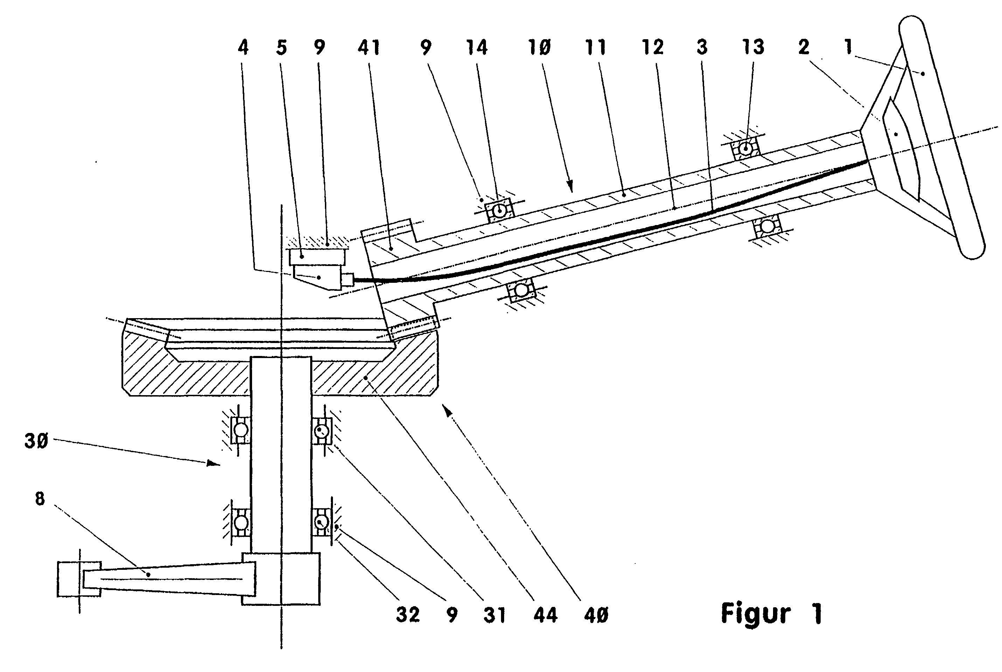

Figur 1 zeigt eine Lenkanlage, die eine zweiteilige Lenksäule (10, 30) mit einem zwischengeschalteten Winkelgetriebe (40) umfaßt. Der erste, das Lenkrad (1) tragende Lenksäulenabschnitt (10) ist beispielsweise ein zweifach gelagertes Lenkrohr (11). Das Lenkrohr (11) hat hier einen Neigungswinkel von ca. 10° gegenüber der Fahrzeuglängsachse. Am unteren Ende des Lenkrohres (11) ist ein Getrieberad (41) angeordnet. Dieses Getrieberad (41) kämmt mit einem auf dem zweiten Lenksäulenabschnitt (30) sitzenden Getrieberad (44). Der zweite, ebenfalls zweifach mit Wälzlagern (31, 32) gelagerte Lenksäulenabschnitt (30) hat an seinem freien Ende einen Spurhebel (8). Die Neigung des unteren Lenksäulenabschnitts (30) gegenüber der Fahrzeughochachse beträgt hier ca. 0°. Das Winkelgetriebe (40) ist beispielsweise ein Kronenradgetriebe, das eine Übersetzung von i_{L}>3 hat.

Im Lenkrohr (11) des ersten Lenksäulenabschnitts (10) liegt ein Kabel (3) oder Kabelbaum, das oder der an elektrischen oder elektronischen Baugruppen angeschlossen ist, die im Lenkrad (1) integriert sind. Diese Baugruppen sind z.B. Bedienelemente u.a. für ein Signalhorn, Anzeigeelemente, ein Airbag (2) u.s.w.

Das in einem Stecker (4) endende Kabel (3) ist im Bereich des Winkelgetriebes (40) an einer dort angeordneten Buchse (5) angeschlossen. Die Buchse (5) ist an der Fahrzeugkarosserie (9) befestigt. Das Kabel (3) kann auch direkt zur Zentralelektronik oder dem Sicherungskasten geführt werden und am Ort der Buchse (5) nur fixiert sein.

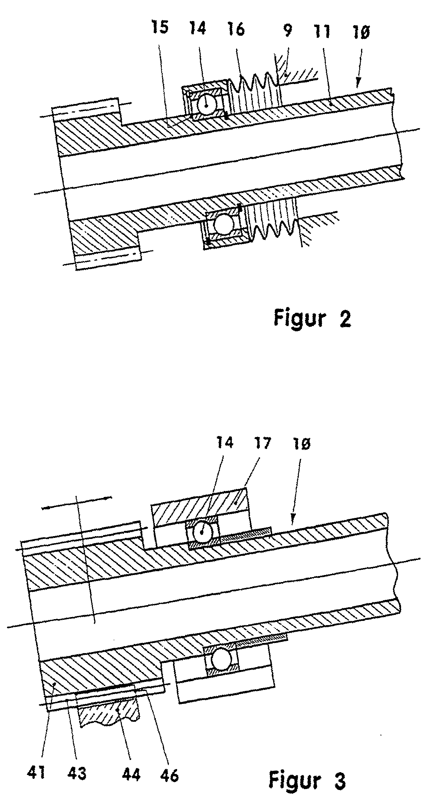

Nach Figur 1 ist der obere Lenksäulenabschnitt (10) über zwei Wälzlager (13) und (14) gelagert. Das in der Nähe des Winkelgetriebes (40) angeordnete Wälzlager (14) bildet das Festlager. In Figur 2 liegt es in Fahrtrichtung gesehen an einem Wellenbund (15) des Lenkrohres (11) an. Das Festlager (14) stützt sich über einen drehstarren Faltenbalg (16) an der Fahrzeugkarosserie (9) ab. Der Faltenbalg (16) soll bei einem Unfall zumindest einen Teil der Stoßenergie absorbieren und ein tieferes Eindringen des oberen Lenksäulenabschnitts (10) in die Fahrgastzelle verhindern. Gleichzeitig ist der Faltenbalg (16) so ausgelegt, daß er bei einen Lenkradaufprall des Fahrers verletzungsmindernd annähernd in Fahrtrichtung nachgibt. Der Faltenbalg (16) dehnt sich in dieser Situation, so daß das Wälzlager (14) in zwei Richtungen axial gesichert sein muß.

Im übrigen können anstelle der Wälzlager auch Gleitlager verwendet werden. Auch können die Lager unabhängig von ihrer Lagerart quergeteilt sein, um eine einfachere Montage zu ermöglichen.

In Figur 3 ist ein Kronenradgetriebe (41, 44) gezeigt, das eine sogenannte Cylkroverzahnung am Kronenrad (44) aufweist.

Das zylindrische Ritzelrad (41) hat hier eine normale Evolventenverzahnung. Die Verzahnung (43) ist mindestens doppelt so breit wie die Verzahnung (46) des Kronenrads (44). Aufgrund des Verzahnungstyps und der Verzahnungsbreite kann der obere Lenksäulenabschnitt (10) zur Lenkradpositionsverstellung in Längsrichtung um mindestens die halbe Verzahnungsbreite des Ritzelrades (41) verschoben werden. Für die Lenkradpositionsverstellung muß der Außenring des Festlagers (14) gegenüber dem ihn lagernden Bauteil (17) einen Spielsitz haben. Der Spielsitz wird beispielsweise mit einer längsgeschlitzten Klemmhülse (17) erzeugt. Der Innendurchmesser der Klemmhülse (17) kann über eine beispielsweise mechanisch, elektrisch, hydraulisch oder pneumatisch betätigte Vorrichtung zum Klemmen des Außenringes des Wälzlagers (14) reduziert werden. Die hier nicht dargestellte Vorrichtung wird vom Fahrer aktiviert.

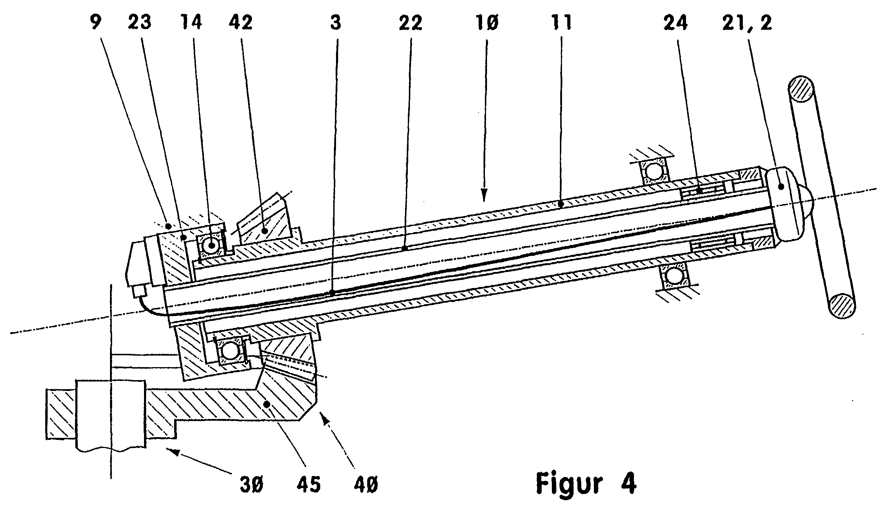

Figur 4 zeigt einen oberen Lenksäulenabschnitt (10) mit drehstarr angeordneter Lenkradnabe (21). Die Lenkradnabe (21) sitzt auf einem langgestreckten, durch das Lenkrohr (11) geführten Nabenträger (22). Der hier als Rohr dargestellte Nabenträger (22) endet im Bereich des Winkelgetriebes (40) in einem Lagerflansch (23), der an der Fahrzeugkarosserie (9) befestigt ist. Der Nabenträger (22) stützt sich in der Nähe der Lenkradnabe (21) über beispielsweise ein Wälzlager (24) im Lenkrohr (11) ab. Er trägt die Bedien-, Anzeigeelemente und eventuell ein Kombiinstrument sowie ggf. einen Airbag und nimmt in seinem Hohlraum das dortin geführte Kabel (3) auf.
Um zu vermeiden, daß das Kabel (3) im Lenkrohr (11) scheuert, kann das Kabel (3) dort gespannt verlegt werden. Unabhängig hiervon kann es auch ganz oder abschnittsweise in Schaumstoff eingebettet sein. Eine weitere Alternative stellt ein Sprialkabel dar, das beispielsweise an der Innenwandung des Lenkrohres (11) anliegt.

In einer drehstarren Lenkradnabe kann beispielsweise ein integrierter Airbag gegenüber dem Lenkradkranz außermittig angeordnet werden. Das ist sicherheitstechnisch von Vorteil.

Das Lenkrohr (11) ist in Figur 4 mit seinem unteren Ende im Lagerflansch (23) über das Festlager (14) geführt. Zwischen dem Fest- (14) und dem Loslager (13) sitzt auf dem Lenkrohr (11) das erste Getrieberad (42). Es ist hier ein Kegelritzel (42), das mit einem auf dem unteren Lenksäulenabschnitt (30) sitzenden Tellerradsegment (45) kämmt.

Das Lenkrohr (11) und/oder der Nabenträger (22) sind hier nur beispielhaft als "starre" Rohre dargestellt. In der Praxis sind sie zur Minimierung der Verletzungsgefahr des Fahrers in Längsrichtung - ab einer bestimmten unfallbedingten Belastung - nachgiebige Bauteile wie z.B. Teleskoprohre, Gitterrohre oder andere torsionssteife aber stauchbare und/oder ausknickbare Konstruktionen. Gleichzeitig sind die Bauteile (11, 22) so biegesteif ausgelegt, daß sie beim Fahren kaum schwingungsbedingte Störgeräusche erzeugen.

Auch kann der obere Lenksäulenabschnitt (30) im Gegensatz zur Darstellung in den Figuren 1 und 4 deutlich kürzer sein, so daß auf eine stauchbare Auslenkung der Bauteile (11) und (22) verzichtet werden kann.

Die Lenksäulenabschnitte (10, 30), das Lenkrad (1), das Winkelgetriebe (40) sowie die Verkabelung einschließlich der elektrischen oder elektronischen Baugruppen (2) können auch als separat montierbares Modul aufgebaut sein. Hierzu werden die Lenksäulenabschnitte (10, 30,) über einen gemeinsamen Träger gegeneinander fixiert. Über den Träger wird das Modul bei der Fahrzeugendmontage an der Fahrzeugkarosserie (9) befestigt.

### Bezugszeichenliste

- 1: Lenkrad
- 2: Airbag
- 3: Kabel, Kabelbaum
- 4: Stecker
- 5: Buchse

- 8: Spurhebel
- 9: Fahrzeugkarosserie

- 10: erster Lenksäulenabschnitt
- 11: Lenkrohr, Lenkwellenelement
- 12: Längsachse
- 13: Loslager
- 14: Festlager
- 15: Wellenbund
- 16: Faltenbalg
- 17: Klemmhülse

- 21: Lenkradnabe
- 22: Nabenträger, Lenkwellenelement
- 23: Lagerflansch
- 24: Wälzlager

- 30: zweiter Lenksäulenabschnitt
- 31, 32: Wälzlager

- 40: Winkelgetriebe
- 41, 42: erstes Getrieberad, Ritzelrad, Kegelritzel
- 43: Verzahnung von (41)
- 44: zweites Getrieberad; Kronenrad,
- 45: Tellerradsegment
- 46: Verzahnung

## Patentansprüche

1. Lenkanlage für Kraftfahrzeuge mit einer zwischen dem Lenkrad und dem Spurhebel angeordneten, mindestens zweiteiligen Lenksäule, wobei der das Lenkrad tragende erste Lenksäulenabschnitt in einem Winkel zwischen 0 bis 30° zur Fahrzeuglängsachse und der den Spurhebel tragende Lenksäulenabschnitt in einem Winkel zwischen 0 bis 40° zur Fahrzeughochachse ausgerichtet ist und zwischen beiden Längssäulenabschnitten ein Winkelgetriebe angeordnet ist, **dadurch gekennzeichnet,**
- **daß** mindestens der erste Lenksäulenabschnitt (10) zwischen dem Lenkrad (1) und dem Winkelgetriebe (40) ein rohrförmiges, mindestens im Bereich seiner Enden offenes Lenkwellenelement (11) ist, das zumindest über zwei Lager an der Fahrzeugkarosserie (9) um seine Längsachse (12) drehbar gelagert ist und
- **daß** der minimale Innendurchmesser des ersten Lenkwellenelements (11) im Bereich zwischen den Lagern und außerhalb des Anflanschbereiches des ersten Getrieberades mindestens um den Faktor 15 größer ist als die Differenz zwischen dem mittleren Außendurchmesser und dem minimalen Innendurchmesser des Lenkwellenelements (11).

2. Lenkanlage gemäß Anspruch 1, **dadurch gekennzeichnet, daß** das Lenkwellenelement (11) des ersten Lenksäulenabschnitts (10) über zwei Lager (13, 14) an der Fahrzeugkarosserie (9) abgestützt ist, wobei das dem Lenkrad (1) benachbarte Lager (13) ein Loslager ist, während das dem Winkelgetriebe (40) benachbarte Lager (14) ein Festlager ist.

3. Lenkanlage gemäß Anspruch 2, **dadurch gekennzeichnet, daß** das Festlager (14) mittels eines Faltenbalges (16) an der Fahrzeugkarosserie (9) abgestützt ist.

4. Lenkanlage gemäß Anspruch 1, **dadurch gekennzeichnet, daß** das erste Getrieberad (41) eine Verzahnung (43) mit einer zylindrischen Hüll- und Teilungsfläche aufweist und eine Verzahnungsbreite hat, die mindestens doppelt so breit ist wie die Verzahnungsbreite des mit ihm kämmenden zweiten Getrieberades (44).

5. Lenkanlage gemäß Anspruch 3, **dadurch gekennzeichnet, daß** das Festlager (14) in einer vom Fahrer fernbedienbaren Klemmhülse (17) längsverschieblich sitzt.

6. Lenkanlage gemäß Anspruch 1, **dadurch gekennzeichnet, daß** im Lenkwellenelement (11) des ersten Lenksäulenabschnitts (10) ein weiteres Lenkwellenelement (22) gelagert ist, das an seinem vorderen Ende eine Lenkradnabe (21) trägt und sich an seinem hinteren Ende drehstarr an der Fahrzeugkarosserie (9) abstützt.

7. Lenkanlage gemäß Anspruch 2, **dadurch gekennzeichnet, daß** der minimale Innendurchmesser des zweiten Lenkwellenelements (22) im Bereich zwischen den Lagern mindestens um den Faktor 15 größer ist als die Differenz zwischen dem mittleren Außendurchmesser und dem minimalen Innendurchmesser des Lenkwellenelements (22).

8. Lenkanlage gemäß Anspruch 1 und/oder 6, **dadurch gekennzeichnet, daß** das Lenkwellenelement (11) und/oder (12) rohrförmig ausgebildet ist und mindestens im Bereich seiner Enden Öffnungen aufweist.

## Claims

1. The invention concerns a steering unit for vehicles with a steering column, which has at least two parts and is disposed between the steering wheel and the steering arm, whereby the first section of the steering column, which carries the steering wheel, is orientated at an angle of between 0 and 30° in relation to the longitudinal axis of the vehicle, and the section of the steering column carrying the steering arm is orientated at an angle of between 0 and 40° in relation to the vertical axis of the vehicle, and a mitre wheel is disposed between the two sections of the steering wheel,
**characterized in that**
- at least the first steering column section (10) has a tubular steering shaft element (11), which is open at least in the area of its ends, between the steering wheel (1) and the mitre wheel (40), this steering shaft element being supported such that it can rotate about its longitudinal axis (12), by means of at least two bearings on the vehicle bodywork (9) and
- the minimal inner diameter of the first steering shaft element (11) is, in the area between the bearings and outside the flanging area of the first gear wheel, at least fifteen times larger than the difference in size between the central outer diameter and the minimum inner diameter of the steering shaft element (11).

2. Steering unit in accordance with claim 1, **characterized in that** the steering shaft element (11) of the first steering column section (10) is supported by means of two bearings (13, 14) on the vehicle bodywork (9), whereby the bearing (13) adjacent to the steering wheel (1) is a non-fixed bearing, while the bearing (14) adjacent to the mitre wheel (40) is a fixed bearing.

3. Steering unit in accordance with claim 2, **characterized in that** the fixed bearing (14) is supported on the vehicle bodywork (9) by means of a bellows-type element (16).

4. Steering unit in accordance with claim 1, **characterized in that** the first gear wheel (41) has toothing (43) with a cylindrical addendum envelope and a plane of division and has a toothing width which is at least twice as wide as the width of the toothing of the second gear wheel (44) which meshes with it.

5. Steering unit in accordance with claim 3, **characterized in that** the fixed bearing (14) sits, such that it can be displaced in a longitudinal direction, in a collet (17) which can be remotely controlled by the driver.

6. Steering unit in accordance with claim 1, **characterized in that** a further steering shaft element (22), which carries a steering wheel hub (21) on its front end and is supported, on its rear end, rotationally fixed on the vehicle bodywork (9), is supported in the steering shaft element (11) of the first steering shaft column section (10).

7. Steering unit in accordance with claim 2, **characterized in that** the minimum internal diameter of the second steering shaft element (22) is larger, in the area between the bearings, by a factor of at least 15, than the difference between the central outer diameter and the minimal inner diameter of the steering shaft element (22).

8. Steering unit in accordance with claim 1 and/or 6, **characterized in that** the steering shaft element (11) and/or (12) is developed in tubular form and has, at least in the area of its ends, openings.

## Revendications

1. Système de direction pour véhicules automobiles comportant une colonne de direction formée au moins de deux éléments et disposée entre le volant de direction et le bras de porte-fusée, dans lequel la première section de colonne de direction, qui porte le volant, fait un angle compris entre 0 et 30° par rapport à l'axe longitudinal du véhicule et la partie de la colonne de direction, qui porte le bras de porte-fusée, fait un angle compris entre 0 et 40° par rapport à l'axe vertical du véhicule, tandis qu'un mécanisme de renvoi est disposé entre les deux parties de la colonne de direction, **caractérisé en ce**
- **qu'**au moins la première partie (10) de la colonne de direction entre le volant (1) et le mécanisme de renvoi (40) est un élément tubulaire (11) d'arbre de direction, ouvert au moins au niveau de ses extrémités et qui peut être monté au moins à l'aide de deux paliers sur la carrosserie (9) du véhicule de manière à pouvoir tourner autour de son axe longitudinal (12), et
- **que** le diamètre intérieur minimum du premier élément (11) de l'arbre d'articulation est supérieur au moins du facteur 15 à la différence entre le diamètre extérieur médian et le diamètre intérieur minimum de l'élément (11) de l'arbre de direction, dans la zone située entre les paliers et à l'extérieur de la zone de raccordement par bride du premier pignon du mécanisme.

2. Système de direction selon la revendication 1, **caractérisé en ce que** l'élément (11) de l'arbre de direction de la première partie (10) de la colonne de direction prend appui par l'intermédiaire de deux paliers (13,14) sur la carrosserie (9) du véhicule, le palier (13) voisin de la colonne de direction (1) étant un palier libre, tandis que le palier (14) voisin du mécanisme de renvoi (40) est un palier fixe.

3. Système de direction selon la revendication 2,
**caractérisé en ce que** le palier fixe (14) est supporté au moyen d'un soufflet (16) sur la carrosserie (9) du véhicule.

4. Système de direction selon la revendication 1, **caractérisé en ce que** le premier pignon (41) du mécanisme possède une denture (43) comportant une surface enveloppe et une surface de division cylindriques, et possède une largeur de denture, qui est au moins égale au double de la largeur de la denture du second pignon (44) du mécanisme, qui engrène avec le premier pignon.

5. Système de direction selon la revendication 3, **caractérisé en ce que** le palier fixe (14) est disposé de manière à être déplaçable longitudinalement dans une douille de serrage (17) télécommandable par le conducteur.

6. Système de direction selon la revendication 1, **caractérisé en ce que** dans l'élément (11) de l'arbre de direction de la première partie (10) de la colonne de direction est monté un autre élément (22) de la colonne de l'arbre de direction, qui porte un moyeu (21) du volant sur son extrémité avant et prend appui, par son extrémité arrière, d'une manière bloquée en rotation sur la carrosserie (9) du véhicule.

7. Système de direction selon la revendication 2, **caractérisé en ce que** le diamètre intérieur minimum du second élément (22) de l'arbre de direction est supérieur, dans la zone située entre les paliers, au moins du facteur 15 à la différence entre le diamètre extérieur médian et le diamètre intérieur minimum de l'élément (22) de l'arbre de direction.

8. Système de direction selon la revendication 1 et/ou 6, **caractérisé en ce que** l'élément (11) et/ou (12) de l'arbre de direction est agencé avec une forme tubulaire et comporte des ouvertures au moins dans la zone de ses extrémités.
